# EUROPEAN PATENT APPLICATION

(11) **EP 4 649 831 A1**
(43) Date of publication of application: **19.11.2025**
(21) Application number: 25172362.3
(22) Date of filing: 24.04.2025
(51) Int. Cl.: A23G 9/16, A23G 9/22, A23G 9/28, G06N 20/00, G06F 30/27, G06N 3/126, G05B 13/02, G05B 19/00, G06F 119/14, G06F 119/18, G06F 113/08

(54) **A METHOD AND A DEVICE FOR SUPPORTING AN OPERATION OF A PRODUCTION LINE FOR PRODUCING ICE CREAM**

(30) Priority: 14.05.2024 EP 24175602
(71) Applicant: Tetra Laval Holdings & Finance S.A., 1009 Pully (CH)
(72) Inventor: TRINDADE LEITE, Willian, 221 86 Lund (SE); SCHELLENBERG, Noah, 221 86 Lund (SE); GUEL, Yuel, 11520 Col. Granada, México D.F. (MX); LAMENSKI, Petre, 221 86 Lund (SE); KOSTADINOV, Martin, 221 86 Lund (SE); TRAN, Do, 221 86 Lund (SE)
(74) Representative: Tetra Pak Patent Attorneys

(57) **Abstract**

A computer-implemented method (200) for supporting an operation of a production line (100) for producing ice cream (IC) is disclosed. The production line (100) comprises a continuous freezer arrangement (104). The method comprises
receiving (202) sensor data collected during the operation of the continuous freezer arrangement (104), wherein the sensor data reflects parameter values of the production line (100),
generating (204) a weight function and/or a volume function reflecting the output weight (W) and/or the output volume (V) as a function of the parameter values defined by a machine learning model (114), wherein the machine learning model (114) has been trained by means of reference sensor data indicative of weight (W) and/or volume (V) of ice cream (IC) produced by the production line (100) associated with the reference sensor data, and
applying (206) an optimization function (115) to identify candidate parameter values of the processing line (100) that is optimized with respect to the weight function and/or volume function in view of a mean target of the weight (W) and/or a mean target of the volume (V), and/or a deviation target of the weight (W) and/or a deviation target of the volume (V).

## Description

### Technical Field

The invention relates to ice cream production technology. More particularly, it is related to a method and a device for supporting an operation of a production line for producing ice cream.

### Background Art

Today it is well known to use continuous freezers in ice cream production lines. In short, the continuous freezers serve the purpose of freezing and churning an ice cream mixture, usually comprising milk, cream, sugar, stabilizers, emulsifiers and flavorings, into a smooth and creamy texture. For optimal freezing and churning, the ice cream mixture should be kept at a certain temperature, usually -4 to -6 degrees C. Inside the freezer, the ice cream mixture is exposed to a number of rotating blades or dashers. These blades serve two purposes; they continuously churn the mixture to incorporate air and prevent large ice crystals from forming, and they also scrape the frozen mixture from walls inside the continuous freezers. Depending on the desired product, adjustments can be made to e.g. a speed of the blades or the temperature inside the freezer. These adjustments can affect an over-run (an amount of air incorporated into the ice cream) and the texture of the product. Once the ice cream reaches the desired consistency, it is extruded from the continuous freezer in a continuous stream. It can then be directed into containers, such as tubs, cones or trays, for further processing.

Even though the continuous freezers have been used for ice cream production for many years and improvements have been made over the years, it is still today difficult to control the continuous freezers with respect to weight and/or volume of the output ice cream.

### Summary

It is an object of the invention to at least partly overcome one or more of the above-identified limitations of the prior art. In particular, it is an object to provide an approach that provides for that the continuous freezers are not only producing ice cream with a smooth and creamy texture, being the result of that a precise amount of air is incorporated and that there are no or few large ice crystals, but also that the weight and/or volume of the ice cream fed out from the continuous freezer are held at a more consistent level over time.

Generally, it has been found that by using a machine learning model, it is made possible to understand a relationship between sensor data, obtained via sensors provided in a production line, and output weight and/or output volume of ice cream. This relationship can be expressed in terms of a weight function and/or a volume function. Since the sensor data is reflecting parameter values being used in the production line, it is made possible, when having the weight function and/or volume function, to also achieve an understanding of a relationship between the parameter values of the production line and the output weight and/or volume. By using a machine learning model, it is made possible to generate such functions despite the fact that a large number of parameter values and types of sensor data are involved. Once having these functions generated, it has been found that an optimization function, or optimization algorithm, can be used for identifying candidate parameter values that meet set targets and constraints, e.g. that a mean weight of output ice cream should be within a set weight range and/or that a standard deviation of the output ice cream should be within a set deviation range while fulfilling set constraints, such as a set viscosity range of the ice cream. By having the functions defined by the machine learning model and not only using the machine learning model as a black-box model for directly outputting candidate parameter values, e.g. settings of the production line, but using the machine learning model in combination with the optimization function, it is made possible to find candidate parameter values combinations extending beyond training data provided to the machine learning model. Put differently, by starting off by using the machine learning model for finding the functions and continuing with the optimization function for building upon the findings made by the machine learning model, it is made possible to find the candidate parameter values that can provide for that the weight and/or volume are held within well-defined ranges despite that the candidate parameter values can comprise a multitude of data points and available data for training the machine learning model may be limited.

According to a first aspect it is provided a computer-implemented method for supporting an operation of a production line for producing ice cream, wherein the production line may comprise a continuous freezer arrangement, said method comprising receiving sensor data collected during the operation of the continuous freezer arrangement, wherein the sensor data reflects parameter values of the production line, generating a weight function and/or a volume function reflecting the output weight and/or the output volume as a function of the parameter values defined by a machine learning model, wherein the machine learning model has been trained by means of reference sensor data indicative of weight and/or volume of ice cream produced by the production line associated with the reference sensor data, and applying an optimization function to identify candidate parameter values of the processing line that is optimized with respect to the weight function and/or volume function in view of a mean target of the weight and/or a mean target of the volume, and/or a deviation target of the weight and/or a deviation target of the volume.

As described above, by being able to more accurately set parameter vales for the continuous freezer arrangement, a more precise output of ice cream in terms of weight and/or volume can be achieved. Thus, in addition to providing a product having a consistent quality, it is with the approach suggested herein also possible to do so with consistent weight and/or volume. By being able to do so, less overfilling to meet a certain weight and/or volume target is needed, which in turn results in savings for the ice cream producer.

The method may further comprise
transmitting, as a function of the candidate parameter values, a control instruction C indicative of an adjustment of the operation of the continuous freezer arrangement.

The continuous freezer arrangement may comprise multiple continuous freezers, wherein individual candidate parameter values are determined for the multiple continuous freezers.

Using multiple continuous freezers is sometimes the case when several ice cream flavors are to be produced in parallel such that these can be combined into a product in a filler, placed downstream the continuous freezer arrangement. By selecting the candidate parameter values individually for these continuous freezers, the weight and/or volume of the product can be controlled more precisely.

The individual candidate parameter values of each of the multiple continuous freezers may be determined by a continuous freezer individually trained machine learning model, wherein the weight and/or volume functions are individually generated for each of the multiple continuous freezers and the optimization function is applied individually for each of the continuous freezers.

By having individually trained machine learning models for the different continuous freezers, differences between the different continuous freezers can be taken into account in that these are reflected in the respective machine learning models.

The parameter values may be associated with parameters related to a viscosity set point of the ice cream, an outflow set-point of the ice cream, also referred to as outlet flow or cream flow, and/or an over-run set-point of the continuous freezer arrangement.

The machine learning model may be trained by means of the reference sensor data in combination with reference external data comprising reference atmospheric pressure, reference inlet temperature in an inlet of the continuous freezer arrangement, reference inlet pressure in the inlet of the continuous freezer arrangement, reference liquid valve opening, reference dasher/motor speed and/or reference cylindrical pressure, and wherein external data comprising atmospheric pressure, inlet temperature in the inlet and/or inlet pressure in the inlet, liquid valve opening, dasher/motor speed and/or cylindrical pressure are provided as input to the optimization function.

The liquid valve opening, that is, to what degree the valve is opened, affects how much coolant that is fed into the continuous freezer arrangement, this in turn affects the weight and/or volume of the products. The dasher/motor speed, affecting a mechanical processing of the ice cream mixture, and/or the cylindrical pressure, that is a pressure inside the continuous freezer arrangement, may also affect the weight and/or volume.

The optimization function may be configured to meet constraints in the form of an outflow range, an over-run range and/or a viscosity range.

The optimization function may be a genetic algorithm, such as NSGA-II.

By using the genetic algorithm, never-seen combinations of parameter values may form part of available alternatives. In this way, the likelihood of finding an optimal combination of parameter values is increased.

Other alternatives of the genetic algorithm comprise MOEA, AGE-MOEA, DE, NSGA-III, ISRES, etc.

The control instruction may comprise at least one of:
an interruption signal configured to interrupt the operation of the production line,
a correction signal configured to correct a setting and/or a parameter of at least one actuator of the production line in accordance with the candidate parameter values, and/or
an alert signal configured to alert an operator of the production line.

The machine learning model may be trained by means of the reference sensor data in combination with reference product property data indicative of at least one property of an ice cream mixture fed into the continuous freezer arrangement, and wherein product property data is provided as input to the optimization function.

The production line may further comprise an ingredient doser configured to fill ingredients, such as berries or chocolate pieces, into the ice cream fed out from the continuous freezer arrangement, wherein the weight and/or the volume produced by the production line are determined as a combination of a weight and/or a volume of the ice cream output from the continuous freezer arrangement and a weight, a volume, a temperature and/or a consistency of the ingredients fed into the ice cream by the ingredient doser.

By taking into account not only the weight and volume of the ingredients added by the ingredient doser, but also the temperature and/or the consistency, e.g. hardness and/or density, it is made possible to more accurately determine how the ice cream fed out from the continuous freezer arrangement, i.e. downstream the ingredient doser, is affected in terms of the weight and/or volume.

The production line may further comprise a forming apparatus arranged to fill, extrude or mould the ice cream into products, wherein the weight and/or the volume produced by the production line are determined by weighing the products and/or measuring the products.

According to a second aspect it is provided a parameter value determining device comprising a processing unit configured to carry out the method according to the first aspect.

According to a second aspect it is provided a production line for producing ice cream comprising the parameter value determining device according to the second aspect and a continuous freezer arrangement.

According to a third aspect it is provided a computer program product, loadable in a memory of at least one processing unit and comprising instructions suitable for performing the steps of the method according to the first aspect.

Still other objectives, features, aspects and advantages of the invention will appear from the following detailed description as well as from the drawings.

### Brief Description of the Drawings

Embodiments of the invention will now be described, by way of example, with reference to the accompanying schematic drawings, in which
Fig. 1 generally illustrates a production line for producing ice cream.
Fig. 2 is a flowchart illustrating a method for supporting operation of the production line.

### Detailed Description

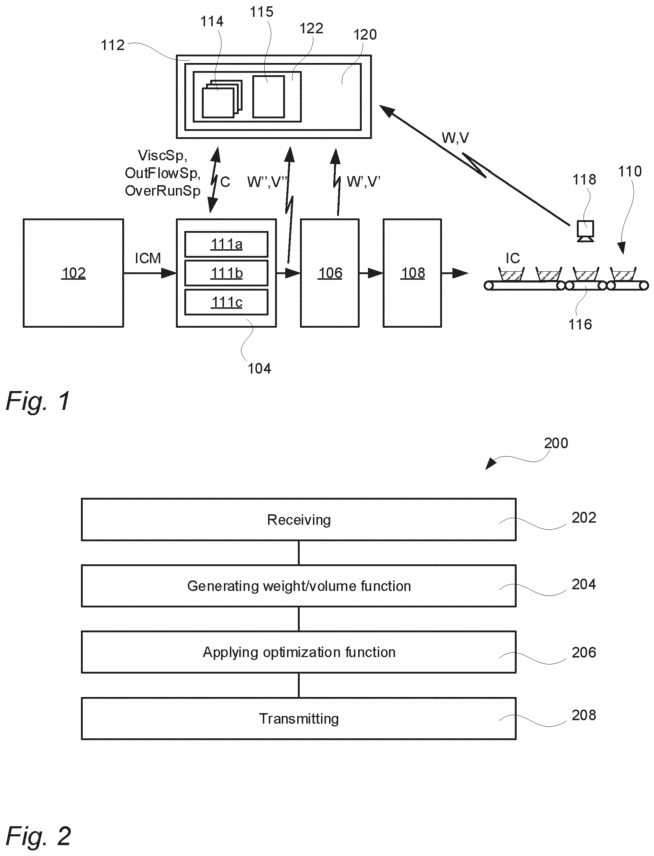

Fig. 1 generally illustrates a production line 100 for producing ice cream IC by way of example. As illustrated, the production line 100 may comprise milk processing equipment 102, such as heat treatment devices, separators and homogenizers, that can process milk such that this is both safe to consume and also meets set requirements, e.g. fulfilling a set requirement with respect to fat content. The milk, processed by the milk processing equipment, together with cream, which also can be processed by the milk processing equipment, sugar, stabilizers, emulsifiers, flavorings, etc, may be combined into an ice cream mixture ICM that is fed into a continuous freezer arrangement 104. In the continuous freezer arrangement 104, the ice cream mixture ICM may be transformed into the ice cream IC by freezing and churning. The churning may be achieved by using rotating blades or dashers. Once having properties of the ice cream IC that meet set requirements, the ice cream IC may be fed out from the continuous freezer arrangement 104 to an ingredient doser 106. In the ingredient doser 106, particles, such as berries or chocolate pieces, may be added to the ice cream. In case there is no particles to be added to the ice cream IC, the ingredient doser 106 can be left out from the production line 100. Downstream the ingredient doser 106, or the continuous freezer arrangement 104 if the ingredient doser 106 is left out, a forming apparatus 108, such as a filler, may be provided. The filler serves the purpose of filling the ice cream IC into containers, such as tubs, cones or trays, such that products 110 are formed. The forming apparatus 108 may also be an extrusion device arranged to form the products 110 by using extrusion. Further, the forming apparatus 108 may be a moulding apparatus arranged to form the products 110 by moulding.

As illustrated, the continuous freezer arrangement 104 may comprise multiple continuous freezers 111a-c, in the example illustrated there are three continuous freezers. One reason for having multiple continuous freezers 111a-c is that each flavoring can be handled in a separate continuous freezer. For instance, in case the product 110, that is, the ice cream IC filled into the containers, is comprising strawberry ice cream, vanilla ice cream and pear ice cream, these three flavorings can each be handled in a dedicated continuous freezer.

To support an operation of the production line 100, a parameter value determining device 112 may be used. As illustrated, this device may be arranged to obtain sensor data from the production line and output candidate parameter values, e.g. suggested settings to be used in the continuous freezer arrangement 104. As exemplified, the sensor data may comprise weight data W and/or volume data V collected during the operation of the production line as well as temperature values, pressure values, flow values, etc in the continuous freezer arrangement. The sensor data may be used as input to a machine learning model 114. The machine learning model 114 can be arranged to generate a weight function and/or a volume function, that is a relationship between the weight and/or volume of the ice cream output and the parameter values being used, wherein the parameter values are reflected by the sensor data being collected. Based on the function(s), an optimization function 115, sometimes referred to as an optimization algorithm, can be applied to identify candidate parameter values meeting a target weight and/or target volume given a number of constraints. The candidate parameter values may include a viscosity set-point ViscSp of the ice cream, an outflow set-point OutFlowSp of the ice cream and/or an over-run set-point OverRunSp of the continuous freezer arrangement. The candidate parameter values may be transmitted to the continuous freezer arrangement 104 as a control instruction C indicative of an adjustment of the operation of the continuous freezer arrangement 104. For instance, the control instruction C may be a correction signal configured to correct a setting and/or parameter of at least one actuator of the production line 100 in accordance with the candidate parameter values. Further, the control instruction C may be an interruption signal configured to interrupt the operation of the production line or an alert signal configured to alert an operator of the production line.

The optimization function 115 may be a genetic algorithm, that is, an optimization algorithm inspired by natural evolution and composed of a genetic recombination and a natural survival selection mechanism that help evolve populations of candidate solutions, which are the different potential parameter vectors, over time in terms of fitness quality. A fitness function is evaluated using the machine learning model's predictions and is formulated to meet the target weight and/or volume and/or a target weight and/or volume deviation. By way of example, the genetic algorithm may be NSGA-II. Put differently, the optimization function 115 may be configured to optimize on the target weight and/or volume such that a mean weight and/or volume is as close as possible to the target weight and/or volume, or the optimization function 115 may be configured to optimize the weight and/or volume deviation. In addition, the different targets may be combined in different ways.

As illustrated, the sensor data including the weight W and/or volume V of the output ice cream IC may be captured by using a weighing device 116, herein forming an integral part of a conveyor band, and/or by using a camera 118 that may form part of a vision-based monitoring system, respectively. In case the production line 100 comprises the ingredient doser 106, the ingredients may be weighed and a volume may be determined such that a weight W' and a volume V' of the ingredients fed into the ice cream IC can be provided to the parameter value determining device 112 and be taken into account when determining the weight W and the volume V. In addition, even though not illustrated, a weight of the containers may also be taken into account when determining the volume V and the weight W of the ice cream IC produced by the production line 100. As illustrated, by having access to these different weights and volumes, it is made possible to indirectly determine the weight W' and the volume V" of the ice cream IC output from the continuous freezer arrangement 104, thereby making it possible to provide for consistent output even though additional pieces of equipment, such as the ingredient doser 106, is placed downstream. In addition, liquid valve opening data, dasher/motor speed data (or rotational blades speed data) and/or cylindrical pressure data may be taken into account.

The parameter value determining device 112 may be configured in various ways. It may, as illustrated, be a device comprising a processing unit 120 comprising a memory 122 holding the machine learning model(s) 114 and the optimization function 115. As an alternative, the device may comprise several units. Further, the parameter value determining device 112 may be placed on site, that is on a production site, or it may be placed externally, e.g. the device 112 may form part of an external server.

Further, the machine learning model 114 may be trained by means of the reference sensor data in combination with reference external data comprising reference atmospheric pressure, reference inlet temperature in an inlet of the continuous freezer arrangement, reference inlet pressure in the inlet of the continuous freezer arrangement, reference liquid valve opening, reference dasher/motor speed and/or reference cylindrical pressure. External data comprising atmospheric pressure, inlet temperature in the inlet, inlet pressure in the inlet, the degree of opening of the liquid valve, the dasher/motor speed and/or the cylindrical pressure may be provided as input to the optimization function 115. In this way, by also taking into account effects caused by e.g. different atmosphere, an even more well-defined ice cream output in terms of weight and/or volume can be achieved.

The optimization function may be configured to meet constraints in the form of an outflow range, an over-run range and/or a viscosity range.

In addition, the machine learning model 114 may be trained by means of the reference sensor data in combination with reference product property data indicative of at least one property of an ice cream mixture ICM fed into the continuous freezer arrangement 104, and product property data may be provided as input to the optimization function 115. By also taking into account such information it is made possible to compensate for variations in different milk batches and the like.

In summary, by being able to control the weight and/or volume more precisely, it is made possible for ice cream producers to meet set requirements more precisely, in turn resulting in that a lower margin for error can be used. Since this in turn results in that less ice cream on average has to be provided in each container, substantial savings can be made by the ice cream producers. Put differently, by using the approach suggested herein there is less need to overfill the containers to make sure that set requirements with respect to weight and/or volume are met.

Fig. 2 is a flowchart illustrating a method 200 for supporting the operation of the production line 100. The method 200 comprises receiving 202 the sensor data, generating 204 the weight function and/or volume function by using the machine learning model 114, and applying 206 the optimization function 115 to identify the candidate parameter values. As illustrated, the method 200 may further comprise transmitting 208, as a function of the candidate parameter values, the control instruction C indicative of the adjustment of the operation of the continuous freezer arrangement.

From the description above follows that, although various embodiments of the invention have been described and shown, the invention is not restricted thereto, but may also be embodied in other ways within the scope of the subject-matter defined in the following claims.

## Claims

1. A computer-implemented method (200) for supporting an operation of a production line (100) for producing ice cream (IC), wherein the production line (100) comprises a continuous freezer arrangement (104), said method comprising
receiving (202) sensor data collected during the operation of the continuous freezer arrangement (104), wherein the sensor data reflects parameter values of the production line (100),
generating (204) a weight function and/or a volume function reflecting the output weight (W) and/or the output volume (V) as a function of the parameter values defined by a machine learning model (114), wherein the machine learning model (114) has been trained by means of reference sensor data indicative of weight (W) and/or volume (V) of ice cream (IC) produced by the production line (100) associated with the reference sensor data, and
applying (206) an optimization function (115) to identify candidate parameter values of the processing line (100) that is optimized with respect to the weight function and/or volume function in view of a mean target of the weight (W) and/or a mean target of the volume (V), and/or a deviation target of the weight (W) and/or a deviation target of the volume (V).

2. The method according to claim 1, further comprising
transmitting (208), as a function of the candidate parameter values, a control instruction (C) indicative of an adjustment of the operation of the continuous freezer arrangement (104).

3. The method according to claim 1 or 2, wherein the continuous freezer arrangement (104) comprises multiple continuous freezers (111a-c), wherein individual candidate parameter values are determined for the multiple continuous freezers.

4. The method according to claim 3, wherein the individual candidate parameter values of each of the multiple continuous freezers (111a-c) are determined by a continuous freezer individually trained machine learning model (114), wherein the weight and/or volume functions are individually generated for each of the multiple continuous freezers (111a-c) and the optimization function is applied individually for each of the continuous freezers.

5. The method according to any one of the preceding claims, wherein the parameter values are associated with parameters related to a viscosity set point (ViscSp) of the ice cream (IC), an outflow set-point (OutFlowSp) of the ice cream, and/or an over-run set-point (OverRunSp) of the continuous freezer arrangement (104).

6. The method according to any one of the preceding claims, wherein the machine learning model (114) has been trained by means of the reference sensor data in combination with reference external data comprising reference atmospheric pressure, reference inlet temperature in an inlet of the continuous freezer arrangement, reference inlet pressure in the inlet of the continuous freezer arrangement reference liquid valve opening, reference dasher/motor speed and/or reference cylindrical pressure and wherein external data comprising atmospheric pressure, inlet temperature in the inlet, inlet pressure in the inlet, liquid valve opening, dasher/motor speed and/or cylindrical pressure are provided as input to the optimization function (115).

7. The method according to any one of the preceding claims, wherein the optimization function (115) is configured to meet constraints in the form of an outflow range, an over-run range and/or a viscosity range.

8. The method according to any one of the preceding claims, wherein the optimization function (115) is a genetic algorithm, such as NSGA-II.

9. The method according to any one of the claims 2 to 8, wherein the control instruction (C) comprises at least one of:
an interruption signal configured to interrupt the operation of the production line (100),
a correction signal configured to correct a setting and/or a parameter of at least one actuator of the production line (100) in accordance with the candidate parameter values, and/or
an alert signal configured to alert an operator of the production line.

10. The method according to any one of the preceding claims, wherein the machine learning model (114) has been trained by means of the reference sensor data in combination with reference product property data indicative of at least one property of an ice cream mixture (ICM) fed into the continuous freezer arrangement (104), and wherein product property data is provided as input to the optimization function (115).

11. The method according to any one of the preceding claims, wherein the production line (100) further comprises an ingredient doser (106) configured to fill ingredients, such as berries or chocolate pieces, into the ice cream fed out from the continuous freezer arrangement (104), wherein the weight (W) and/or the volume (V) produced by the production line (100) are determined as a combination of a weight (W') and/or a volume (V") of the ice cream output from the continuous freezer arrangement (104) and a weight (W),a volume (V'), a temperature and/or a consistency of the ingredients fed into the ice cream by the ingredient doser (106).

12. The method according to any one of the preceding claims, wherein the production line (100) further comprises a forming apparatus (108) arranged to fill, extrude or mould the ice cream into products (110), wherein the weight (W) and/or the volume (V) produced by the production line (100) are determined by weighing the products (110) and/or measuring the products.

13. A parameter value determining device (112) comprising a processing unit (120) configured to carry out the method according to any one of the preceding claims.

14. A production line (100) for producing ice cream (IC) comprising the parameter value determining device (112) according to claim 13 and a continuous freezer arrangement (104).

15. A computer program product, loadable in a memory of at least one processing unit and comprising instructions suitable for performing the steps of the method according to any one of claims 1 to 12.
